# EUROPEAN PATENT SPECIFICATION

(11) **EP 3 632 701 B1**
(45) Date of publication and mention of the grant of the patent: **09.09.2020**
(21) Application number: 18198536.7
(22) Date of filing: 04.10.2018
(51) Int. Cl.: B60B 25/00, B60B 25/02

(54) **BICYCLE WHEEL AND METHOD OF MANUFACTURING THE SAME**
FAHRRADRAD UND VERFAHREN ZUR HERSTELLUNG DAVON
ROUE DE BICYCLETTE ET SON PROCÉDÉ DE FABRICATION

(43) Date of publication of application: 08.04.2020
(73) Proprietor: Corex Materials Corporation, Changhua City, Changhua County (TW)
(72) Inventor: CHIU, Shao-Chen, Taichung City (TW); KU, Chia-Ming, Changhua County (TW)
(74) Representative: Becker & Kurig Partnerschaft Patentanwälte PartmbB

(56) References cited:
- EP-A1- 0 026 514
- CN-Y- 201 136 410
- DE-A1-102006 010 445
- US-A1- 2010 301 663

## Description

### 1. Field of the Invention

The present invention relates to a bicycle wheel, and more particularly relates to a bicycle wheel and a method of manufacturing the bicycle wheel that may achieve effects of lightweight and structural strength.

### 2. Description of Related Art

In general, bicycles are one of the most popular leisure activities at present. In order to provide users with more convenient and easier riding effects, most manufacturers will develop and improve bicycles through various structural designs, material compositions, or transmission methods. For example, for a frame or rim of a bicycle, the manufacturers will prefer to choose lighter materials, and composite materials are one of the choices. Among a wide variety of composite materials, fiber reinforced polymer composite materials are the most widely used. The basic composition of polymer composite materials is fiber and polymer resin base material. Fiber is the main factor that determines the mechanical properties of composite materials, and is used to withstand the main load, improve the rigidity and fatigue resistance of the material, and deformation properties. There are many types of thermoplastics, such as polycarbonate (PC) and polyamide (PA), etc. Furthermore, fibers have different materials and forms. Commonly used materials of fibers in the industry include glass fibers, carbon fibers, and Kevlar fibers. The forms of fibers include spun fiber, continuous fiber, woven fiber, and chopped fiber. In addition, in the application of structure, due to higher material strength requirements, the continuous fiber is the main choice of reinforcing fibers.

Further, the rim is an important medium for the entire bicycle to convert energy into speed, and the quality of the rim affects the riding speed, the pedaling force, and the breaking of the wind. In addition to the lightweight, the inertia, the smoothness, and the rigidity and low wind resistance are also among the important considerations. Therefore, how to achieve a balance between lightweight and structural strength is strongly sought in the existing industries to improve the quality of the bicycle rims. In addition, other conventional bicycle wheels were also disclosed in US 2010/301663 A1 and EP 0 026 514 A1.

To overcome the shortcomings, the present invention provides a bicycle wheel according to claim 1 and a method of manufacturing a bicycle wheel according to claim 8.

The main objective of the present invention is to provide a bicycle wheel and a method of manufacturing the bicycle wheel that may achieve effects of lightweight and structural strength.

The bicycle wheel in accordance with the present invention has a wheel frame. The wheel frame is a hollow and annular frame and is composited by multiple equally sized wheel bars disassembled by a modular concept. Each one of the wheel bars has two halves connected to each other to form the wheel bar, each one of the two halves being made by laminating, heating and forming a thermoplastic prepreg according to the mechanical properties, dimensions, and thickness requirements of the bicycle wheel by determining the number of laminated layers of the thermoplastic prepreg and the orientation of fiber angles of each layer of the thermoplastic prepreg and the design of the modular molds. The equally sized wheel bars are connected to each other to form the bicycle wheel.

Other objects, advantages and novel features of the invention will become more apparent from the following detailed description when taken in conjunction with the accompanying drawings.

### IN THE DRAWINGS:

Fig. 1 is a perspective side view of a first embodiment of a bicycle wheel in accordance with the present invention;
Fig. 2 is an operational perspective side view of a wheel frame of the bicycle wheel in Fig. 1, dismantled into two equal parts;
Fig. 3 is an operational perspective side view of the wheel frame of the bicycle wheel in Fig. 1, dismantled into four equal parts;
Fig. 4 is an operational perspective side view of the wheel frame of the bicycle wheel in Fig. 1, dismantled into six equal parts;
Fig. 5 is an operational and cross sectional side view of a wheel bar of the wheel frame in Fig. 1, dismantled into two equal parts;
Fig. 6 is another operational and cross sectional side view of the wheel bar of the wheel frame in Fig. 1, dismantled into two equal parts;
Fig. 7 is a perspective side view of a second embodiment of a bicycle wheel in accordance with the present invention;
Fig. 8 is an operational perspective view of a rib of the bicycle wheel in Fig. 7, dismantled into two equal parts;
Fig. 9 is another operational perspective view of the rib of the bicycle wheel in Fig. 7, dismantled into two equal parts;
Fig. 10 is a block flow diagram of a method of manufacturing a bicycle wheel in accordance with the present invention;
Fig. 11 is an operational perspective view of stacking multiple thermoplastic prepreg with each other;
Fig. 12 is an operational perspective view of forming the bicycle wheel in the present invention;
Fig. 13 is another operational perspective view of forming the bicycle wheel in the present invention; and
Fig. 14 is an operational perspective view of connecting parts of the bicycle wheel in the present invention.

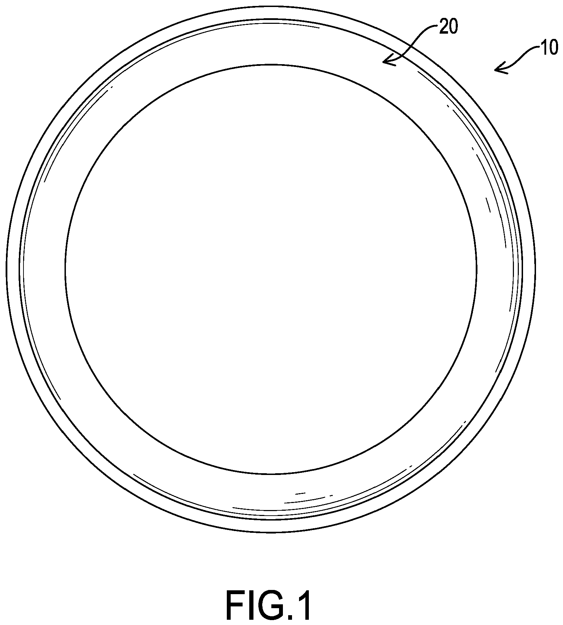

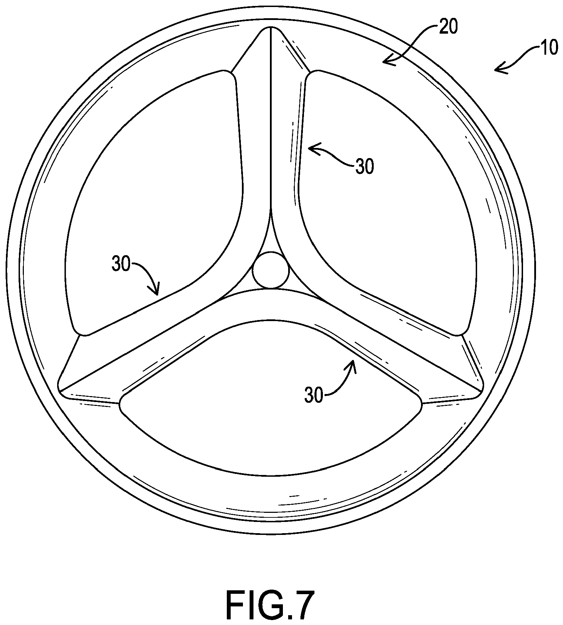

Figs. 1 and 7 show a first embodiment and a second embodiment of a bicycle wheel 10 in accordance with the present invention, respectively. In the first embodiment of the bicycle wheel 10, the bicycle wheel 10 has a wheel frame 20, and in the second embodiment of the bicycle wheel 10, the bicycle wheel 10 has a wheel frame 20 and multiple ribs 30.

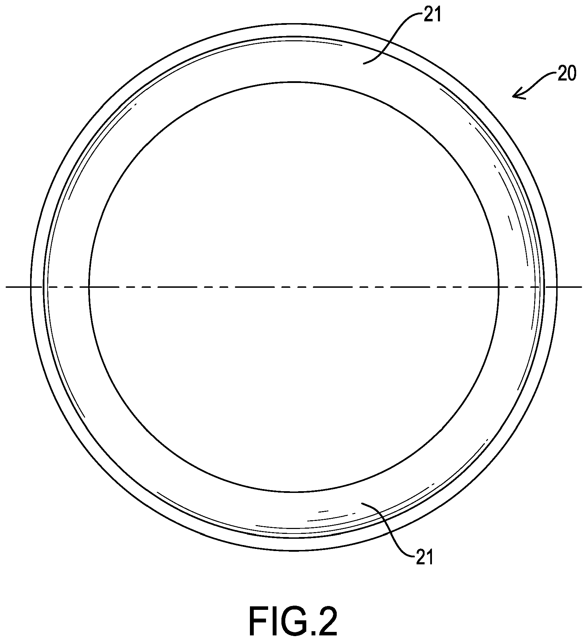

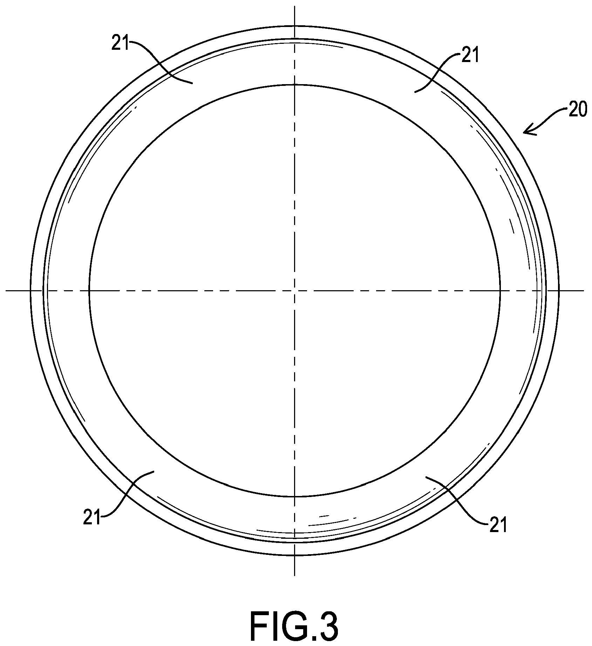

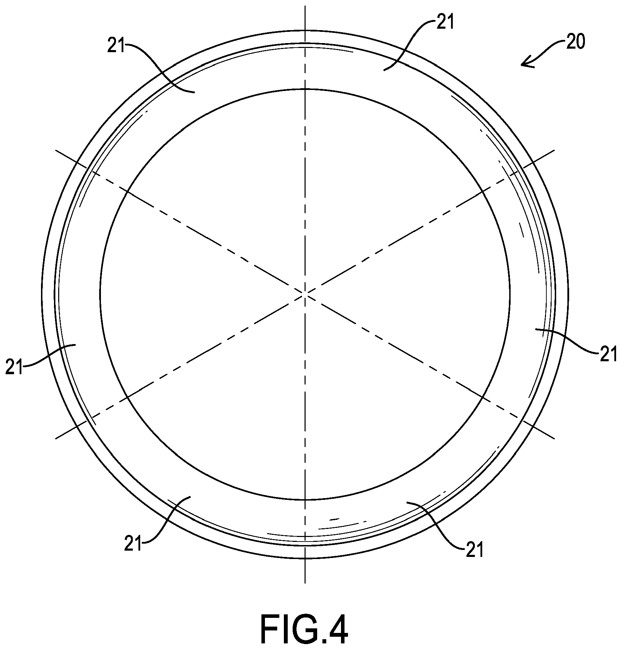

The wheel frame 20 is a hollow and annular frame and is composited by multiple wheel bars 21. With reference to Figs. 2, 3, and 4, the wheel frame 20 is composed of two equal parts of wheel bars 21, four equal parts of wheel bars 21 or six equal parts of wheel bars 21, and all of the wheel bars 21 are of an equal size. Furthermore, the wheel frame 20 also can be composed of three equal parts of wheel bars 21 or five equal parts of wheel bars 21, etc. Additionally, the wheel frame 20 is composed by 2 to 10 equally sized wheel bars 21. Each one of the wheel bars 21 has two halves.

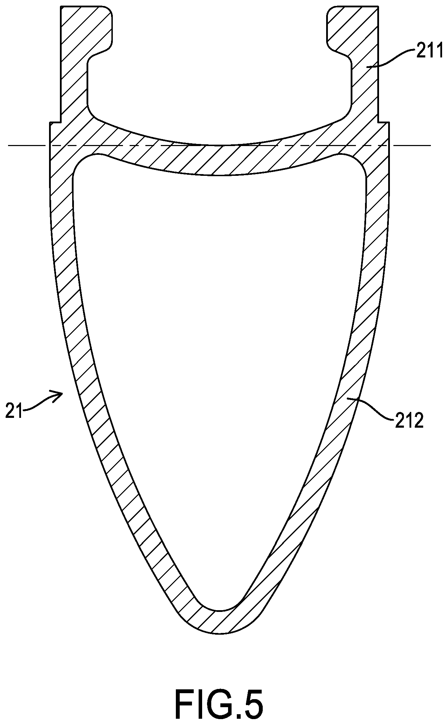

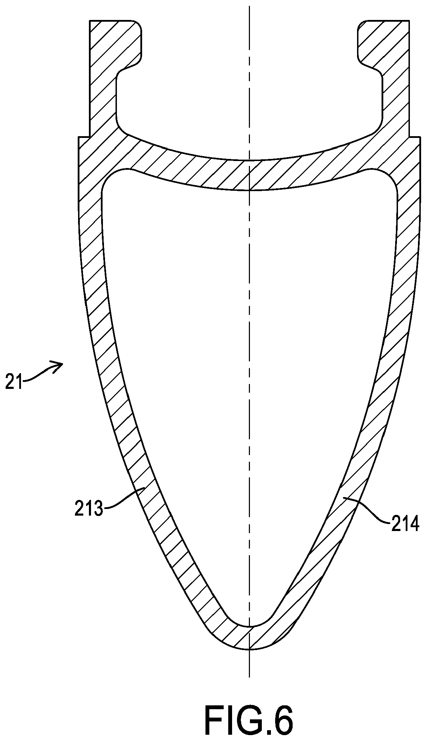

With reference to Fig. 5, each wheel bar 21 has an upper half 211 and a lower half 212. The upper half 211 may be an outer frame segment of the wheel frame 20. The lower half 212 is connected to the upper half 211 to form the wheel bar 21 and may be an inner frame segment of the wheel frame 20. With reference to Fig. 6, each wheel bar 21 has a left half 213 and a right half 214. The right half 214 is connected to the upper half 211 to form the wheel bar 21. Each half 211, 212, 213, 214 of the wheel bar 21 is made by laminating, heating and forming a thermoplastic prepreg 40, and the two corresponding halves 211, 212, 213, 214 are combined to form a wheel bar 21. The multiple wheel bars 21 are connected to each other to form the wheel frame 20. Additionally, two corresponding halves 211, 212, 213, 214 of each wheel bar 21 or multiple wheel bars 21 are connected to each other by the bonding ability of the material itself or by combining an additional additive between the two corresponding halves 211, 212, 213, 214 of each wheel bar 21 or multiple wheel bars 21. Then, the wheel frame 20 is formed by the halves 211, 212, 213, 214 and the wheel bars 21.

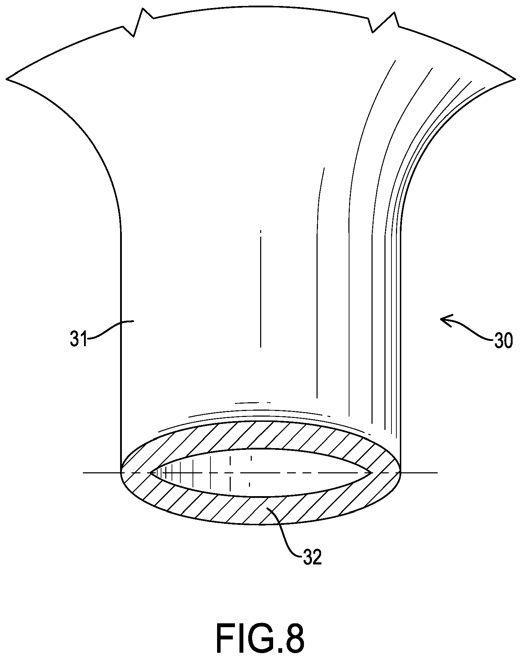

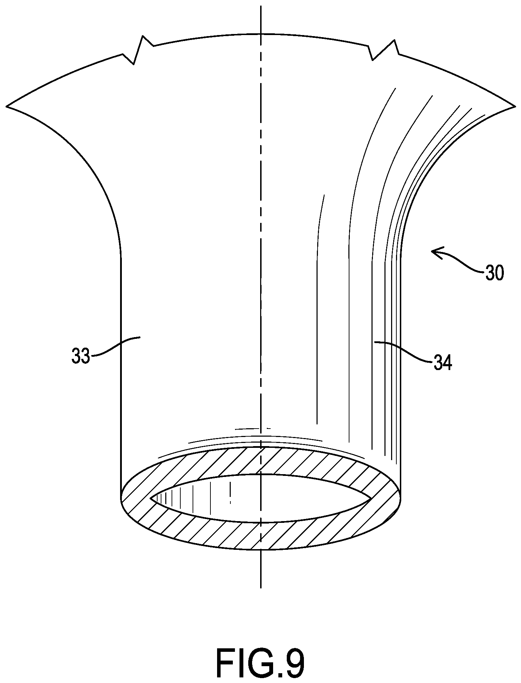

With reference to Fig. 7, in the second embodiment of the bicycle wheel in accordance with the present invention, the ribs 30 are radially spaced apart from the wheel frame 20, and each one of the ribs 30 has an inner end and an outer end. The inner ends of the ribs 30 are connected to each other. The outer ends of the ribs 30 are connected to an inner side of the wheel frame 20. Then, the bicycle wheel 10 is formed by the wheel frame 20 and the multiple ribs 30. With reference to Fig. 8, each rib 30 has an upper half 31 and a lower half 32. The lower half 32 is connected to the upper half 31 to form the rib 30. Furthermore, with reference to Fig. 9, each rib 30 may have a left half 33 and a right half 34. The right half 34 is connected to the left half 33 to form the rib 30.

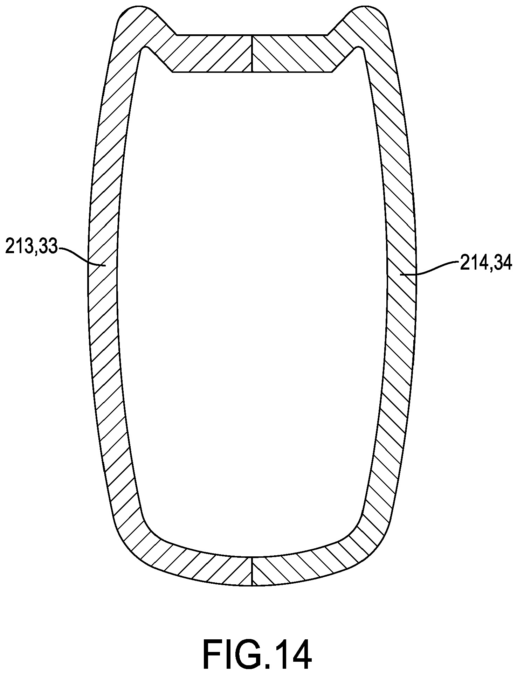

Each half 31, 32, 33, 34 of the rib 30 is made by laminating, heating and forming a thermoplastic prepreg 40, and the two corresponding halves 31, 32, 33, 34 are combined to form a rib 30. The multiple ribs 30 are connected to each other and connected to the wheel frame 20 to form the bicycle wheel 10. Additionally, with reference to Fig. 14, two corresponding halves 213, 214, 33, 34 of each rib 30, or multiple ribs 30 and the wheel frame 20 are connected to each other by the bonding ability of the material itself or through a combination of additives.

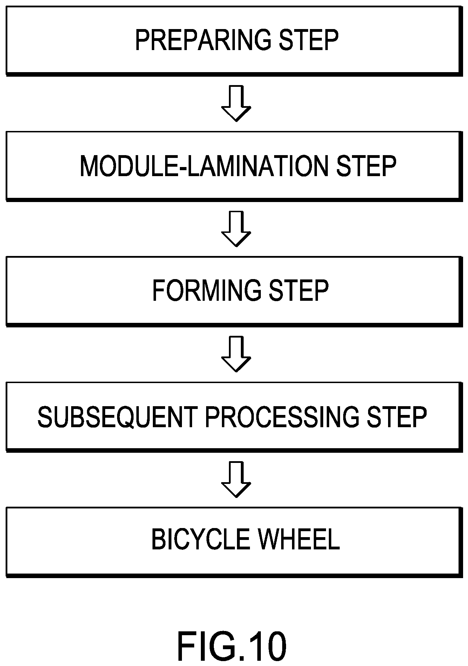

With reference to Fig. 10, a method of manufacturing a bicycle wheel 10 in accordance with the present invention has a preparing step, a module-lamination step, a forming step, and a subsequent processing step.

With reference to Figs. 10 to 13, the preparing step comprises preparing a thermoplastic prepreg 40, multiple modular molds 70, a cutting device, a heating device, a molding device, and at least one processing machine. The thermoplastic prepreg 40 is formed by impregnating a continuous fiber with a resin, a fiber woven cloth or a chopped fiber. In addition, the continuous fiber, the fiber woven cloth and the chopped fiber may be a carbon fiber, a glass fiber or a reinforced fiber. With reference to Figs. 2 to 6, 8, and 9, the bicycle wheel 10 is disassembled into several parts (wheel frame 20 and ribs 30) according to the shape and size of each part. The modular molds 70 have outer dimensions and structures corresponding to the parts of the bicycle wheel 10. After forming the thermoplastic prepreg 40, the thermoplastic prepreg 40 is precut by the cutting machine according to the outer dimensions of each one of the parts of the wheel frame 20 and the ribs 30. After pre-cutting the thermoplastic prepreg 40, the multiple thermoplastic prepreg 40 are stacked with each other and are heated by the heating device to from a thermoplastic composite material 50. The at least one processing machine is used in the subsequent processing step after the forming step.

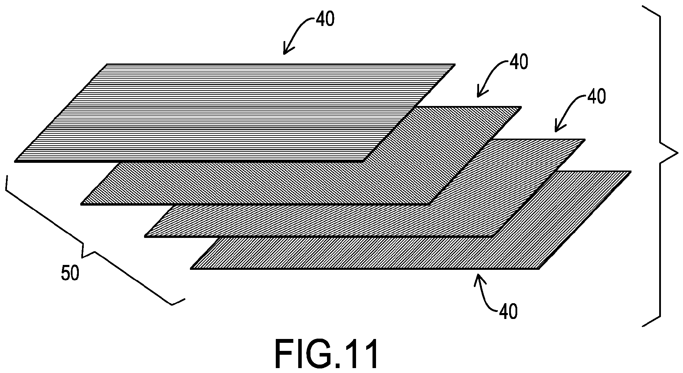

With reference to Figs. 2, 8, and 9, the module-lamination step comprises disassembling the bicycle wheel 10 into two parts of the wheel frame 20 and the ribs 30, and disassembling each one of the parts of the wheel frame 20 and the ribs 30 into multiple halves 211, 212, 213, 214, 31, 32, 33, 34. With reference to Fig. 11, according to the mechanical properties, dimensions and thickness requirements of various parts, and the design of the modular molds 70, the number of laminated layers of the thermoplastic prepreg 40 and the orientation of the fiber angles of each layer of the thermoplastic prepreg 40 will be determined, wherein the fiber angle is between -180 and 180 degrees. The thermoplastic prepreg 40 is pre-cut by the cutting device and is disposed on the heating device. The heating temperature of the heating device must be greater than the glass transition temperature (Tg, 150 to 190° C.) of the thermoplastic prepreg 40, and is between 250° C and 300° C. The viscosity characteristic of the resin of each layer of the thermoplastic prepreg 40 allows the stacked prepreg 40 to be pre-bonded to form the thermoplastic composite material 50.

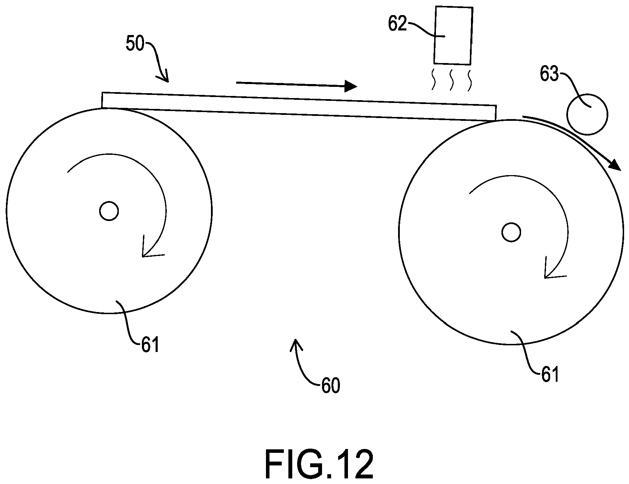

The forming step comprises forming the parts of the bicycle wheel 10 by the modular molds 70 or the molding device at the temperature of 180 to 300°C under the pressure of 1 to 15 Mpa and for the time of 5 to 15 minutes and under other parameter conditions. After forming the parts of the bicycle wheel 10, the parts are connected to each other by the bonding ability of the thermoplastic composite material 50 or an additive to complete the overall structure of the bicycle wheel 10. With reference to Fig. 12, the thermoplastic composite material 50 is processed by a rolling machine 60, and the rolling machine 60 has a rotating roller 61, a heating source 62, and at least one pressing roller 63. Then, the thermoplastic composite material 50 is heat pressed, rolled, processed by pultrusion, etc.

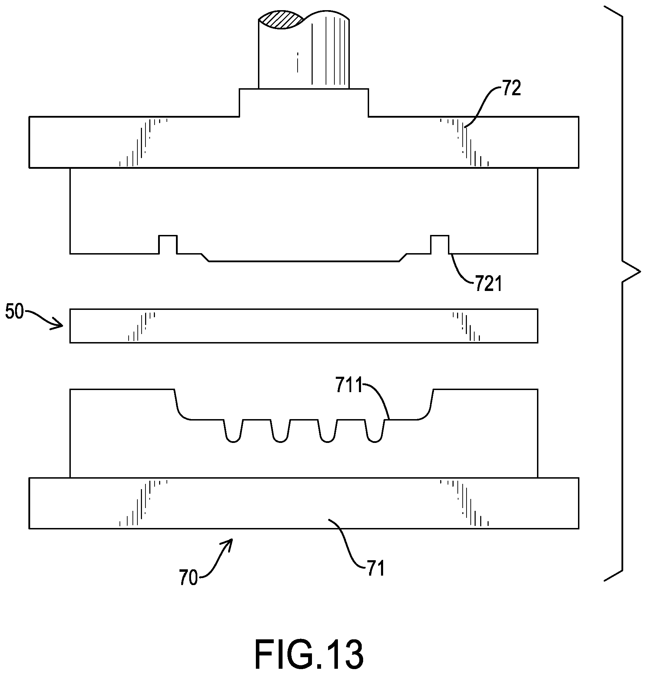

Additionally, with reference to Fig. 13, the thermoplastic composite material 50 is put into the modular mold 70, and the modular mold 70 has a lower mold 71 and an upper mold 72. Each mold 71, 72 has a cavity 711, 712. The thermoplastic composite material 50 is put between the two cavities 711, 712 of the molds 71, 72, and is formed by the above-mentioned temperature, pressure, and time. The purpose of the high temperature is to allow the resin to flow, using its viscosity characteristics to allow inter-laminar resin diffusion and bonding, while the pressure can closely arrange the fibers between the layers, and when the temperature drops below Tg, the mold 70 is de-molded to obtain a finished product.

The subsequent processing step comprises subsequent processing the finished product by the at least one processing machine such as stamping or CNC. Furthermore, if the finished product in the forming step is formed by the modular mold 70, the material in the non-finished area can be cut and separated after the finished product is molded, and the finished product of the bicycle wheel 10 can be obtained.

According to the above-mentioned features and structural relationships, the bicycle wheel 10 of the present invention mainly uses the thermoplastic composite material 50 with laminated design, time, temperature, pressure and other parameter conditions, the bicycle wheel 10 is disassembled by a modular concept, and then the parts can be processed based on the product mechanical properties, size, thickness requirements, in association with design of the modular molds 70. Then, the cutting size of the thermoplastic prepreg 40, the number of the stacked thermoplastic prepreg(s) 40, and the orientation of the fibers in each layer can be determined to achieve the required rigidity of the bicycle wheel 10, and the overall weight of the bicycle wheel 10 can be reduced. Furthermore, by various different forming methods such as heat pressing, rolling, pultrusion, vacuum heating or mold forming, the bicycle wheel 10 is manufactured. By joining or adding materials (such as glue) that can be bonded to the polymer, the polymers in the resin are bonded to each other to provide an excellent bonding strength. Then, the bicycle wheel 10 that is made by the method of the present invention can achieve the effects of lightweight and structural strength, and the practicality of the bicycle wheel 10 can be increased and the quality of the bicycle wheel 10 can be significantly improved.

## Claims

1. A bicycle wheel (10) having:
a wheel frame (20) being a hollow and annular frame and having
multiple equally sized wheel bars (21) disassembled by a modular concept, and each one of the equally sized wheel bars (21) having
two halves connected to each other to form the wheel bar (21), and each one of the two halves being made by laminating, heating and forming a prepreg (40) according to the mechanical properties, dimensions, and thickness requirements of the bicycle wheel (10) by determining the number of laminated layers of the prepreg (40) and the orientation of fiber angles of each layer of the prepreg (40) and the design of the modular molds (70);
wherein the equally sized wheel bars (21) are connected to each other to form the bicycle wheel (10), **characterised in that** the prepreg (40) is a thermoplastic prepreg.

2. The bicycle wheel as claimed in claim 1, wherein
the bicycle wheel (10) has multiple ribs (30) radially spaced apart from the wheel frame (20), and each one of the ribs (30) has
an inner end, and the inner ends of the ribs (30) connected to each other; and
an outer end, and the outer ends of the ribs (30) connected to an inner side of the wheel frame (20);
each rib (30) has two halves connected to each other to form the rib (30), and each one of the two halves is made by laminating, heating and forming a thermoplastic prepreg; and
the multiple ribs (30) are connected to the wheel frame (20) to form the bicycle wheel (10).

3. The bicycle wheel as claimed in claim 1 or 2, wherein the wheel frame (20) has 2 to 10 said equally sized wheel bars (21).

4. The bicycle wheel as claimed in claim 3, wherein the two halves of each wheel bar (21) or the multiple wheel bars (21) are connected to each other by the bonding ability of the material itself to form the wheel frame (20).

5. The bicycle wheel as claimed in claim 3, wherein the two halves of each wheel bar (21) or the multiple wheel bars (21) are connected to each other through a combination of additives to form the wheel frame (20).

6. The bicycle wheel as claimed in claim 1 or 2, wherein the two halves of each wheel bar (21) or the multiple wheel bars (21) are connected to each other by the bonding ability of the material itself to form the wheel frame (20).

7. The bicycle wheel as claimed in claim 1 or 2, wherein the two halves of each wheel bar (21) or the multiple wheel bars (21) are connected to each other through a combination of additives to form the wheel frame (20).

8. A method of manufacturing a bicycle wheel comprising:
a preparing step comprising
preparing a prepreg (40), multiple modular molds (70), a cutting device, a heating device, a molding device, and at least one processing machine;
disassembling the bicycle wheel (10) into several parts according to shape and size of each part; and
forming the modular molds (70) to have outer dimensions and structures corresponding to the parts of the bicycle wheel (10);
a module-lamination step comprising
determining the number of laminated layers of the prepreg (40) and the orientation of fiber angles of each layer of the prepreg (40) according to the mechanical properties, dimensions and thickness requirements of the parts of the bicycle wheel (10) and the design of the modular molds (70);
pre-cutting the prepreg (40) by the cutting device and stacking the prepreg (40) on the heating device;
heating the stacked prepreg (40) by the heating device and adjusting a heating temperature of the heating device to be greater than a glass transition temperature (Tg) of the prepreg (40) to form a composite material (50);
a forming step comprising
forming the parts of the bicycle wheel (10) by the modular molds (70) or the molding device; and
connecting the parts with each other to form a finished product of the bicycle wheel (10); and
a subsequent processing step comprising subsequent processing the finished product by the at least one processing machine to form the bicycle wheel (10), **characterised in that** the prepreg (40) is a thermoplastic prepreg.

9. The method of manufacturing a bicycle wheel as claimed in claim 8, wherein in the preparing step, the thermoplastic prepreg (40) is formed by impregnating a continuous fiber with a resin, a fiber woven cloth or a chopped fiber, and the continuous fiber, the fiber woven cloth and the chopped fiber may be a carbon fiber, a glass fiber or a reinforced fiber.

10. The method of manufacturing a bicycle wheel as claimed in claim 8 or 9, wherein
in the module-lamination step, the fiber angle is between -180 and 180 degrees, and the heating temperature of the heating device is between 250° C and 300° C; and
in the forming step, the parts of the bicycle wheel (10) are formed at the temperature of 180 to 300°C under the pressure of 1 to 15 Mpa and for the time of 5 to 15 minutes.

11. The method of manufacturing a bicycle wheel as claimed in claim 10, wherein in the subsequent processing step, the finished product in the forming step is formed by the modular mold (70), the material in the non-finished area can be cut and separated after the finished product is molded, and the finished product of the bicycle wheel (10) can be obtained.

## Patentansprüche

1. Fahrradrad (10) aufweisend:
einen Radrahmen (20), der ein hohler und ringförmiger Rahmen ist und
mehrere gleich große Radstangen (21) aufweist, die durch ein modulares Konzept zerlegt sind, und wobei jede der gleich großen Radstangen (21) zwei Hälften aufweist, die miteinander verbunden sind, um die Radstangen (21) zu bilden, und wobei jede der beiden Hälften durch Laminieren, Erwärmen und Bilden eines Prepregs (40) entsprechend den mechanischen Eigenschaften, Abmessungen und Dickenanforderungen des Fahrradrads (10) hergestellt wird, indem die Anzahl der laminierten Schichten des Prepregs (40) und die Orientierung der Faserwinkel jeder Schicht des Prepregs (40) und der Entwurf der modularen Formen (70) bestimmt werden;
wobei die gleich großen Radstangen (21) miteinander verbunden sind, um das Fahrradrad (10) zu bilden, **dadurch gekennzeichnet, dass** das Prepreg (40) ein thermoplastisches Prepreg ist.

2. Fahrradrad gemäß Anspruch 1, wobei
das Fahrradrad (10), mehrere Rippen (30) aufweist, die radial von dem Radrahmen (20) beabstandet sind, und jede der Rippen (30)
ein inneres Ende aufweist und die inneren Enden der Rippen (30) miteinander verbunden sind; und
ein äußeres Ende, und die äußeren Enden der Rippen (30) mit einer Innenseite des Radrahmens (20) verbunden sind;
jede Rippe (30) zwei Hälften aufweist, die miteinander verbunden sind, um die Rippe (30) zu bilden, und jede der beiden Hälften durch Laminieren, Erwärmen und Bilden eines thermoplastischen Prepregs hergestellt ist; und
die mehreren Rippen (30) mit dem Radrahmen (20) verbunden sind, um das Fahrradrad (10) zu bilden.

3. Fahrradrad gemäß Anspruch 1 oder 2, wobei der Radrahmen (20) 2 bis 10 gleich große Radstangen (21) aufweist.

4. Fahrradrad gemäß Anspruch 3, wobei die beiden Hälften jeder Radstange (21) oder der mehreren Radstangen (21) durch die Bindungsfähigkeit des Materials selbst, miteinander verbunden sind, um den Radrahmen (20) zu bilden.

5. Fahrradrad gemäß Anspruch 3, wobei die beiden Hälften jeder Radstange (21) oder der mehreren Radstangen (21) durch eine Kombination von Zusätzen miteinander verbunden sind, um den Radrahmen (20) zu bilden.

6. Fahrradrad gemäß Anspruch 1 oder 2, wobei die beiden Hälften von jeder Radstange (21) oder der mehreren Radstangen (21) durch die Bindungsfähigkeit des Materials selbst, miteinander verbunden sind, um den Radrahmen (20) zu bilden.

7. Fahrradrad gemäß Anspruch 1 oder 2, wobei die beiden Hälften von jeder Radstange (21) oder der mehreren Radstangen (21) durch eine Kombination von Zusätzen miteinander verbunden sind, um den Radrahmen (20) zu bilden.

8. Verfahren zum Herstellen eines Fahrradrads, umfassend:
einen Vorbereiteschritt umfassend
Vorbereiten eines thermoplastischen Prepregs (40), mehrerer modularer Formen (70), einer Schneidevorrichtung, einer Heizvorrichtung, einer Formvorrichtung und wenigstens einer Verarbeitungsmaschine;
Zerlegen des Fahrradrads (10) in mehrere Teile je nach Form und Größe jedes Teils; und
Bilden der modularen Formen (70), um Außenabmessungen und Strukturen aufzuweisen, die den Teilen des Fahrradrads (10) entsprechen;
einen Modul-Laminierungsschritt, umfassend
Bestimmen der Anzahl der laminierten Schichten des Prepregs (40) und der Ausrichtung der Faserwinkel jeder Schicht des Prepregs (40) entsprechend den mechanischen Eigenschaften, Abmessungen und Dickenanforderungen der Teile des Fahrradrads (10) und dem Design der modularen Formen (70);
Vorschneiden des Prepregs (40) durch die Schneidevorrichtung und Stapeln des Prepregs (40) auf der Heizvorrichtung;
Erwärmen des gestapelten Prepregs (40) durch die Heizvorrichtung und Einstellen einer Erwärmungstemperatur der Heizvorrichtung, die größer als eine Glasübergangstemperatur (Tg) des Prepregs (40) ist, um ein Verbundmaterial (50) zu bilden;
einen Bildeschritt, umfassend
Bilden der Teile des Fahrradrads (10) durch die modularen Formen (70) oder die Formvorrichtung; und
Verbinden der Teile miteinander, um ein fertiges Produkt des Fahrradrads (10) zu bilden; und
einen nachfolgenden Verarbeiteschritt, der das nachfolgende Verarbeiten des fertigen Produkts durch die wenigstens eine Verarbeitemaschine umfasst, um das Fahrradrad (10) zu bilden, **dadurch gekennzeichnet, dass** das Prepreg (40) ein thermoplastisches Prepreg (40) ist.

9. Verfahren zum Herstellen eines Fahrradrads gemäß Anspruch 8, wobei in dem Vorbereiteschritt das thermoplastische Prepreg (40) durch Imprägnieren einer kontinuierlichen Faser mit einem Harz, einem fasergewebten Gewebe oder einer geschnittenen Faser gebildet wird und die kontinuierliche Faser, das fasergewebte Gewebe und die geschnittene Faser eine Kohlefaser, eine Glasfaser oder eine verstärkte Faser sein können.

10. Verfahren zum Herstellen eines Fahrradrads gemäß Anspruch 8 oder 9, wobei
in dem Modul-Laminierungsschritt der Faserwinkel zwischen -180 und 180 Grad beträgt, und die Erwärmungstemperatur der Heizvorrichtung zwischen 250° C und 300° C liegt; und
in dem Bildeschritt, die Teile des Fahrradrads (10) bei einer Temperatur von 180 bis 300°C unter einem Druck von 1 bis 15 MPa und für die Dauer von 5 bis 15 Minuten gebildet werden.

11. Verfahren zum Herstellen eines Fahrradrads gemäß Anspruch 10, wobei in dem nachfolgenden Verarbeiteschritt das fertige Produkt in dem Bildeschritt durch die modulare Form (70) gebildet wird, das Material in dem nicht-fertigen Bereich geschnitten und getrennt werden kann, nachdem das fertige Produkt geformt ist, und das fertige Produkt des Fahrradrads (10) erhalten werden kann.

## Revendications

1. Roue de vélo (10) comportant :
un cadre de roue (20) qui est un cadre creux et annulaire et comporte
des barres de roue multiples de taille égale (21) démontées par concept modulaire, chacune des barres de roue de taille égale (21) comportant
deux moitiés connectées l'une à l'autre pour former la barre de roue (21), et chacune des deux moitiés étant fabriquée par laminage, chauffage et moulage d'un préimprégné (40) en fonction des besoins de propriétés mécaniques, dimensions et d'épaisseur de la roue de vélo (10) en déterminant le nombre de couches laminées du préimprégné (40) et l'orientation des angles des fibres de chaque couche de préimprégné (40) et la conception des moules modulaires (70) ;
les barres de roue multiples de taille égale (21) étant connectées les unes aux autres pour former la roue de vélo (10), **caractérisée en ce que** le préimprégné (40) est un préimprégné thermoplastique.

2. Roue de vélo selon la revendication 1, dans laquelle
la roue de vélo (10) a des nervures multiples (30) espacées radialement du cadre de roue (20), et chacune des nervures (30) comporte
une extrémité intérieure, et les extrémités intérieures des nervures (30) connectées les unes aux autres ; et
une extrémité extérieure, et les extrémités extérieures des nervures (30) connectées à une face intérieure du cadre de roue (20) ;
chaque nervure (30) comporte deux moitiés connectées l'une à l'autre pour former la nervure (30), et chacune des deux moitiés est fabriquée par laminage, chauffage et moulage d'un préimprégné thermoplastique ; et
les nervures multiples (30) sont connectées au cadre de roue (20) pour former la roue de vélo (10).

3. Roue de vélo selon la revendication 1 ou 2, dans laquelle le cadre de roue (20) comporte 2 à 10 barres de roue de taille égale (21).

4. Roue de vélo selon la revendication 3, dans laquelle les deux moitiés de chaque barre de roue (21) ou les barres de roue multiples (21) sont connectées les unes aux autres par l'aptitude à la liaison du matériau lui-même pour former le cadre de roue (20).

5. Roue de vélo selon la revendication 3, dans laquelle les deux moitiés de chaque barre de roue (21) ou les barres de roue multiples (21) sont connectées les unes aux autres par une combinaison d'additifs pour former le cadre de roue (20).

6. Roue de vélo selon la revendication 1 ou 2, dans laquelle les deux moitiés de chaque barre de roue (21) ou les barres de roue multiples (21) sont connectées les unes aux autres par l'aptitude à la liaison du matériau lui-même pour former le cadre de roue (20).

7. Roue de vélo selon la revendication 1 ou 2, dans laquelle les deux moitiés de chaque barre de roue (21) ou les barres de roue multiples (21) sont connectées les unes aux autres par une combinaison d'additifs pour former le cadre de roue (20).

8. Procédé de fabrication d'une roue de vélo, comprenant :
une étape de préparation comprenant
la préparation d'un préimprégné (40), de moules modulaires multiples (70), d'un dispositif de coupe, d'un dispositif de chauffage, d'un dispositif de moulage, et d'au moins une machine de traitement ;
le démontage de la roue de vélo (10) en plusieurs pièces en fonction de la forme et de la taille de chaque pièce ; et
le formage des moules modulaires (70) pour qu'ils aient des dimensions extérieures et des structures correspondant aux pièces de la roue de vélo (10) ;
une étape de laminage de module comprenant
la détermination du nombre de couches laminées du préimprégné (40) et l'orientation des angles des fibres de chaque couche du préimprégné (40) en fonction des besoins de propriétés mécaniques, dimensions et d'épaisseur de la roue de vélo (10) et de la conception des moules modulaires (70) ;
la pré-coupe du préimprégné (40) par le dispositif de coupe et l'empilement du préimprégné (40) sur le dispositif de chauffage ;
le chauffage du préimprégné empilé (40) par le dispositif de chauffage et le réglage d'une température de chauffage du dispositif de chauffage pour qu'elle soit supérieure à une température de transition vitreuse (Tg) du préimprégné (40) afin de former un matériau composite (50) ;
une étape de moulage comprenant
le moulage des pièces de la roue de vélo (10) par les moules modulaires (70) ou le dispositif de moulage ; et
la connexion des pièces les unes aux autres pour former un produit fini de la roue de vélo (10) ; et
une étape de traitement suivante comprenant le traitement suivant du produit fini par l'au moins une machine de traitement afin de former la roue de vélo (10), **caractérisé en ce que** le préimprégné (40) est un préimprégné thermoplastique.

9. Procédé de fabrication d'une roue de vélo selon la revendication 8, dans lequel, dans l'état de préparation, le préimprégné thermoplastique (40) est formé en imprégnant une fibre continue avec une résine, un textile tissé fibreux ou une fibre hachée, et la fibre hachée peut être une fibre de carbone, une fibre de verre ou une fibre renforcée.

10. Procédé de fabrication d'une roue de vélo selon la revendication 8 ou 9, dans lequel,
dans l'étape de laminage de module, l'angle des fibres va de -180 à 180 degrés, et la température de chauffage du dispositif de chauffage va de 250 °C à 300 °C ; et
dans l'étape de moulage, les pièces de la roue de vélo (10) sont formées à la température de 180 à 300 °C sous une pression de 1 à 15 Mpa et pour une durée de 5 à 15 minutes.

11. Procédé de fabrication d'une roue de vélo selon la revendication 10, dans lequel, dans l'étape de traitement suivante, le produit fini dans l'étape de moulage est formé par le moule modulaire (70), le matériau de la partie non finie peut être coupé et séparé une fois que le produit fini est moulé, et le produit fini de la roue de vélo (10) peut être obtenu.
